# EUROPÄISCHE PATENTSCHRIFT

(11) **EP 2 193 980 B1**
(45) Veröffentlichungstag und Bekanntmachung des Hinweises auf die Patenterteilung: **02.01.2013**
(21) Anmeldenummer: 09014263.9
(22) Anmeldetag: 14.11.2009
(51) Int. Cl.: B62D 25/12, E05D 5/06

(54) **Rohrbügel für eine Klappe eines Kraftfahrzeugs**
Tube bar for a flap of a motor vehicle
Arceau tubulaire pour un clapet d'un véhicule automobile

(30) Priorität: 03.12.2008 DE 102008060315
(43) Veröffentlichungstag der Anmeldung: 09.06.2010
(73) Patentinhaber: Bayerische Motoren Werke Aktiengesellschaft, 80809 München (DE)
(72) Erfinder: Müller, Michael, 80636 München (DE); Gillmaier, Siegfried, 94424 Arnstorf (DE); Stankovic, Boris, 84130 Dingolfing (DE)

(56) Entgegenhaltungen:
- EP-A2- 0 223 283
- DE-A1- 10 034 141
- DE-B3-102006 010 186
- JP-A- 7 317 416
- US-B1- 6 382 704

## Beschreibung

Die Erfindung betrifft einen Rohrbügel für eine Klappe eines Kraftfahrzeugs, nach den im Oberbegriff des Patentanspruches 1 angegebenen Merkmalen.

Ein derartiger Rohrbügel dürfte beispielsweise in der DE 10 2006 028 008 A1 verwendet sein, der zur Durchführung durch einen Durchbruch im Kofferraum des Kraftfahrzeugs gekrümmt verläuft. Der Rohrbügel dürfte bis auf separat angeschlossene Anbindungen an seinen Endbereichen einen über seine Länge gleich bleibenden Querschnitt mit einer gleichen Wandstärke aufweisen. Um ein Kabel zumindest bereichsweise geschützt aufnehmen zu können, ist zwischen einem Au-βenbereich des Rohrbügels und einem beispielsweise aus einem Spritzgussteil gefertigten Kabelkanal ein Aufnahmeraum für das Kabel gebildet. Der Kabelkanal ist im Querschnitt U-förmig ausgebildet und über einen größeren Längenbereich an die gekrümmte Kontur des Rohrbügels derart angepasst, dass der Rohrbügel zusammen mit dem Kabelkanal durch den Durchbruch im Kofferraum hindurch verstellt werden kann. Der mit separaten Anbindungen versehene Rohrbügel ist durch mehrere aufwändig zu fertigende und zu montierende Einzelteile gebildet, die durch den separaten Kabelkanal zu ergänzen sind. Die Einzelteile des Rohrbügels dürften zumindest an ihren Anschlussbereichen Materialverdic.kungen bzw. -verdoppelungen und damit eine entsprechende Gewichtserhöhung des Rohrbügels bewirken. Ein ähnlicher Rohsbügel ist auch in DE 10034191A1 offenbart.

Der Erfindung liegt die Aufgabe zu Grunde, einen Rohrbügel für eine Klappe eines Kraftfahrzeugs mit den im Oberbegriff des Patentanspruches 1 angegebenen Merkmalen anzugeben, der gegenüber bekannten Ausführungen eine Kosten- und Gewichtsreduzierung und eine höhere Maßhaltigkeit sowie eine größere Freiheit in der Bauteilgestaltung ermöglicht.

Diese Aufgabe ist durch die im Patentanspruch 1 angegebenen Merkmale gelöst. Vorteilhafte Ausgestaltungen der Erfindung sind den Unteransprüchen entnehmbar.

Der erfindungsgemäße Rohrbügel für eine Klappe eines Kraftfahrzeugs, der an einem Endbereich um eine reelle oder virtuelle ortsfeste oder ortsveränderliche Schwenkachse schwenkbar mit einem ortsfesten oder verstellbaren Fahrzeugteil und an dem anderen Endbereich mit der Klappe des Kraftfahrzeugs verbunden sein kann, ist mittels Innenhochdruckumformung aus einem vorgebogenen Rohr gefertigt. An wenigstens einem stärker belasteten Bereich weist der Rohrbügel einen größeren Querschnitt mit einem entsprechend größeren Biegewiderstandsmoment auf. An dem der Klappe zugewandten Endbereich ist in einem Wandbereich des Rohrbügels wenigstens eine in der Form beliebige Umfangsausnehmung ausgebildet, die über ihren Umfang geschlossen oder offen, beispielsweise an der Stirnseite des Rohrbügels offen ausgebildet sein kann. Durch die Umfangsausnehmung kann ein Kabel oder Seilzug in das Innere des Rohrbügels geführt sein. Ebenso kann durch die Umfangsausnehmung hindurch ein etwa radial auf der anderen Seite abgeflachter Wandbereich des Rohrbügels mittels wenigstens einem Befestigungsmittel, beispielsweise einer Schraube oder einem Niet, mit der Klappe verbunden sein. Mit der Erfindung ist eine Gewichtsreduzierung durch gezielten Materialeinsatz und Vermeidung von Bauteiltrennungen bzw. Blechdoppelungen möglich. Der Rohrbügel kann mit geringen Herstellkosten maschinell gefertigt werden. In der Bauteilgestaltung und im Erscheinungsbild bzw. Design sowie in der Beanspruchung ist eine größere Freiheit durch den im gesamten Längenbereich weitgehend frei wählbaren Querschnitt des Rohrbügels gegeben. Der Rohrbügel ermöglicht eine hohe Qualität, Maßhaltigkeit und Wiederholgenauigkeit. Auf ein Schweißen von Bauteilen kann vollständig verzichtet werden, wodurch ein eventueller Schweißverzug vermieden ist.

Ein Ausführungsbeispiel der Erfindung wird anhand einer Zeichnung näher erläutert. Es zeigen
Fig. 1 eine vereinfachte Seitenansicht des Rohrbügels,
Fig. 2 eine vereinfachte Draufsicht auf den Rohrbügel,
Fig. 3 ein Querschnitt des Rohrbügels entlang der Schnittlinie III-III in Fig. 1 und
Fig. 4 ein Querschnitt des Rohrbügels entlang der Schnittlinie IV-IV in Fig. 1.

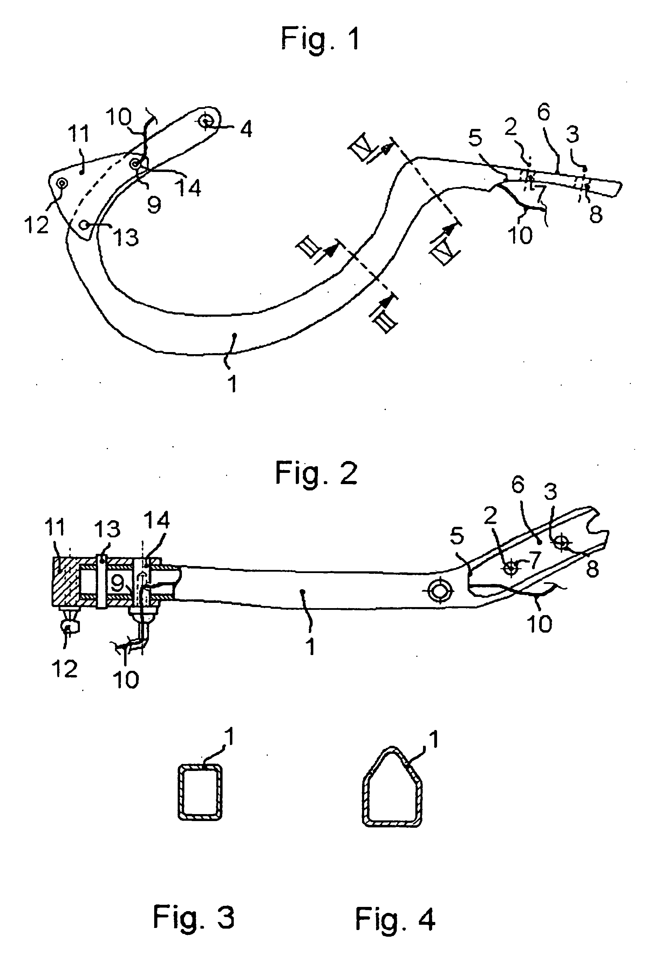

Der in Fig. 1 in einer Seitenansicht vereinfacht dargestellte Rohrbügel 1 ist an den Stellen 2 und 3, die sich an einem Endbereich des Rohrbügels 1 befinden, beispielsweise über jeweils eine nicht dargestellte Schraube mit einer nicht abgebildeten Klappe eines Kraftfahrzeugs lösbar verbunden, wobei die Mittelachsen der Schrauben durch jeweils eine unterbrochene Linie angedeutet sind. Der Rohrbügel 1 ist bei dem Ausführungsbeispiel an dem von der Klappe abgewandten Endbereich um eine reelle Schwenkachse 4 schwenkbar mit einem ortsfesten, nicht abgebildeten Fahrzeugteil verbunden.

Der Rohrbügel 1 ist mittels Innenhochdruckumformung aus einem vorgebogenen Rohr gefertigt und weist an wenigstens einem stärker belasteten Bereich, der sich beispielsweise an der in Fig. 1 durch die Schnittlinie IV-IV gekennzeichneten Stelle befindet, einen größeren, in Fig. 4 dargestellten Querschnitt mit einem entsprechend größeren Biegewiderstandsmoment auf. Der Rohrbügel 1 weist über seine Länge einen zumindest bereichsweise variablen Querschnitt und/oder eine zumindest bereichsweise variable Wanddicke auf, der bzw. die an die zu erwartenden Belastungen angepasst ist. Beispielsweise an der in Fig. 1 durch die Schnittlinie III-III gekennzeichneten Stelle weist der Rohrbügel 1 den in Fig. 3 dargestellten Querschnitt auf.

Der Rohrbügel 1 kann einen größeren Materialeinsatz an wenigstens einem höher belasteten Bereich und/oder einen geringeren Materialeinsatz an wenigstens einem weniger belasteten Bereich aufweisen. An dem der Klappe zugewandten Endbereich des Rohrbügels 1 ist wenigstens eine Umfangsausnehmung 5 ausgebildet, durch die ein in den Figuren vereinfacht dargestelltes Kabel 10 oder ein Seilzug in das Innere des Rohrbügels 1 geführt ist und durch die hindurch ein einseitig abgeflachter Wandbereich 6 des Rohrbügels 1 an den Stellen 2 und 3 über die nicht dargestellten Schrauben mit der nicht abgebildeten Klappe verbunden ist.

Hierzu ist der abgeflachte Wandbereich 6 auf dem zur Umfangsausnehmung 5 etwa radial entgegen gesetzten Umfangsbereich des Rohrbügels 1 ausgebildet und liegt an der Klappe bzw. an einem damit verbundenen Bauteil an. Die nicht dargestellten Schrauben liegen mit ihren Schraubköpfen bzw. mit dazwischen gelegten Unterlagsscheiben von innen an dem abgeflachten Wandbereich 6 an, wobei jeweils der Schraubenschaft der Schrauben eine zugeordnete Durchgangsöffnung 7 bzw. 8 in dem einseitig abgeflachten Wandbereich 6 des Rohrbügels 1 durchsetzt und dahinter jeweils mit einem Gewindebereich in ein Gewinde in der Klappe oder in einer Gewindemutter eingeschraubt ist. Die Schrauben können wie üblich oder in besonderer Weise gegen Verdrehen gesichert sein. Die Schraube und die Mutter bzw. das Gewinde, in das die Schraube einschraubbar ist, können auch umgekehrt angeordnet sein.

Der Rohrbügel 1 weist an einem von der Klappe entfernten Umfangsbereich eine bei dem Ausführungsbeispiel im Querschnitt kreisförmige radiale Umfangsöffnung 9 auf, durch die das über die Umfangsausnehmung 5 in das Innere des Rohrbügels 1 geleitete Kabel 10 bzw. der Seilzug aus dem Inneren des Rohrbügels 1 nach außen geführt ist.

Die Umfangsausnehmung 5 ist durch einen stirnseitig am Rohrbügel 1 offenen Ausschnitt gebildet, der zur Vermeidung von Kerben an seinem von dem Stirnbereich abgewandten Bereich bogenförmig bzw. gerundet ausgebildet ist. Falls die Umfangsöffnung 9 im Querschnitt nicht kreisförmig ausgebildet wird, ist sie zur Vermeidung von Kerben vorzugsweise ebenfalls zumindest bereichsweise bogenförmig bzw. gerundet auszubilden.

In einem Abstand von der reellen Schwenkachse 4 des Rohrbügels 1 ist an einem mit dem Rohrbügel 1 verbundenen Anlenkteil 11 ein Kraftübertragungselement 12 befestigt, das zumindest mittelbar mit einem Dämpfungselement und/oder einer Öffnungshilfe und/oder einer Schließhilfe mit einem Motorantrieb und/oder einem Federkraftspeicher verbunden ist. Das Kraftübertragungselement 12 ist ein mit dem Rohrbügel oder Anlenkteil 11 verbundener Vorsprung oder Bolzen oder Kugelbolzen, an dem zumindest mittelbar das Dämpfungselement und/oder ein Übertragungse!ement, beispielsweise ein Seil oder eine Stange, angelenkt ist. Das Seil oder die Stange ist zumindest mittelbar mit dem Motorantrieb bzw. Federkraftspeicher verbunden. Der Vorsprung oder Bolzen bzw. Kugelbolzen kann durch Reibschweißen oder eine Clinchverbindung oder Vertaumeln mit dem Rohrbügel bzw. Anlenkteil 11 verbunden sein.

Das Anlenkteil 11 ist beispielsweise ein U-förmig gebogenes Blechteil, das an seinen Schenkeln über beispielsweise bereits an dem Rohrbügel 1 vorgesehene Bolzen 13, 14 und/oder eine Clinchverbindung mit dem Rohrbügel 1 verbunden ist.

Bei Verwendung einer Clinchverbindung kann diese beispielsweise mittels einem Stempelwerkzeug und einem Gegenwerkzeug durch eine lokale Umformung gebildet sein.

Die Erfindung kann auch von dem Ausführungsbeispiel abweichend ausgeführt werden. Der Rohrbügel kann um eine reelle oder virtuelle ortsfeste oder ortsveränderliche Schwenkachse schwenkbar mit einem ortsfesten oder verstellbaren Fahrzeugteil und an dem anderen Endbereich mit der Klappe oder mit einem an der Klappe befestigten Bauteil verbunden sein. Bei allen Ausführungen ist der Rohrbügel mittels Innenhochdruckumformung aus einem vorgebogenen Rohr gefertigt. Der Rohrbügel kann an wenigstens einem stärker belasteten Bereich einen größeren Querschnitt mit einem entsprechend größeren Biegewiderstandsmoment aufweisen. An dem der Klappe zugewandten Endbereich des Rohrbügels kann wenigstens eine Umfangsausnehmung ausgebildet sein, durch die ein Kabel oder Seilzug in das Innere oder aus dem Inneren des Rohrbügels geführt ist. Alternativ oder zusätzlich kann durch die Umfangsausnehmung hindurch ein einseitig abgeflachter Wandbereich des Rohrbügels mit der Klappe verbunden sein. Hierzu kann der abgeflachte Wandbereich des Rohrbügels mit der Klappe bzw. einem mit der Klappe verbundenen Bauteil beispielsweise verschraubt oder vernietet sein. Der Rohrbügel kann über seine Länge einen zumindest bereichsweise variablen Querschnitt und/oder eine zumindest bereichsweise variable Wanddicke aufweisen, der bzw. die vorzugsweise an die zu erwartenden Belastungen angepasst ist. Der Rohrbügel kann auch einen größeren Materialeinsatz an wenigstens einem höher belasteten Bereich und/oder einen geringeren Materialeinsatz an wenigstens einem weniger belasteten Bereich aufweisen.

## Patentansprüche

1. Rohrbügel (1) für eine Klappe eines Kraftfahrzeugs, der an einem Endbereich um eine reelle oder virtuelle ortsfeste oder ortsveränderliche Schwenkachse (4) schwenkbar mit einem ortsfesten oder verstellbaren Fahrzeugteil und an dem anderen, einseitig abgeflachten Endbereich mit der Klappe des Kraftfahrzeugs verbunden ist, **dadurch gekennzeichnet, dass** der Rohrbügel (1) mittels einer Innenhochdruckumformung aus einem vorgebogenen Rohr einteilig gefertigt ist und an wenigstens einem stärker belasteten Bereich einen größeren Querschnitt mit einem entsprechend größeren Biegewiderstandsmoment aufweist und an dem der Klappe zugewandten Endbereich des Rohrbügels (1) wenigstens eine Umfangsausnehmung (5) ausgebildet ist, durch die entweder ein Kabel (10) oder Seilzug in das Innere oder aus dem Inneren des Rohrbügels (1) geführt ist und/oder durch die hindurch der einseitig abgeflachte Wandbereich (6) des Rohrbügels (1) über wenigstens ein Verbindungsmittel, beispielsweise eine Schraube oder einen Niet, mit der Klappe verbunden ist.

2. Rohrbügel nach Anspruch 1, **dadurch gekennzeichnet, dass** der Rohrbügel (1) an einem von der Klappe entfernten Umfangsbereich eine Umfangsöffnung (9) aufweist, durch die das Kabel (10) bzw. der Seilzug aus dem Inneren oder in das Innere des Rohrbügels (1) geführt ist.

3. Rohrbügel nach einem der Ansprüche 1 bis 2 **dadurch gekennzeichnet, dass** die Umfangsausnehmung (5) und/oder gegebenenfalls die Umfangsöffnung (9) durch einen Ausschnitt gebildet ist bzw. sind, der zur Vermeidung von Kerben zumindest bereichsweise bogenförmig bzw. gerundet ausgebildet ist.

4. Rohrbügel nach einem der Ansprüche 1 bis 3, **dadurch gekennzeichnet, dass** der Rohrbügel (1) über seine Länge einen zumindest bereichsweise variablen Querschnitt und/oder eine zumindest bereichsweise variable Wanddicke aufweist, der bzw. die an die zu erwartenden Belastungen angepasst ist.

5. Rohrbügel nach 4, **dadurch gekennzeichnet, dass** der Rohrbügel (1) einen größeren Materialeinsatz an wenigstens einem höher belasteten Bereich und/oder einen geringeren Materialeinsatz an wenigstens einem weniger belasteten Bereich aufweist.

6. Rohrbügel nach einem der Ansprüche 1 bis 5 **dadurch gekennzeichnet, dass** in einem Abstand von der reellen oder virtuellen Schwenkachse (4) des Rohrbügels (1) an dem Rohrbügel oder an einem mit dem Rohrbügel verbundenen Anlenkteil (11) wenigstens ein Kraftübertragungselement (12) befestigt ist, das zumindest mittelbar mit einem Dämpfungselement und/oder einer Öffnungshilfe und/oder einer Schließhilfe mit einem Motorantrieb und/oder einem Federkraftspeicher verbunden ist.

7. Rohrbügel nach Anspruch 6, **dadurch gekennzeichnet, dass** das Kraftübertragungselement (12) ein mit dem Rohrbügel oder Anlenkteil (11) verbundener Vorsprung oder Bolzen oder Kugelbolzen ist, an dem zumindest mittelbar das Dämpfungselement und/oder ein Übertragungselement, beispielsweise ein Seil oder eine Stange, angelenkt ist, das zumindest mittelbar mit dem Motorantrieb bzw. Federkraftspeicher verbunden ist, oder zusätzlich gegebenenfalls der Vorsprung oder Bolzen bzw. Kugelbolzen durch Reibschweißen oder eine Clinchverbindung oder Vertaumeln mit dem Rohrbügel bzw. Anlenkteil verbunden ist.

8. Rohrbügel nach Anspruch 6 oder 7, **dadurch gekennzeichnet, dass** das Anlenkteil (11) ein Blechteil ist und/oder das Anlenkteil (11) wenigstens über einen Bolzen (13, 14) und/oder eine Clinchverbindung und/oder einen Niet und/oder eine Schraube mit dem Rohrbügel (1) verbunden ist.

9. Rohrbügel nach Anspruch 8, **dadurch gekennzeichnet, dass** die Clinchverbindung mittels einem Stempelwerkzeug und einem Gegenwerkzeug durch eine lokale Umformung gebildet ist.

## Claims

1. A tubular bracket (1) for a flap of a motor vehicle, which is pivotably connected at one end region about a real or virtual stationary or positionally variable pivot axis (4) to a stationary or adjustable vehicle part, and is connected at the other end region, which is flattened on one side, to the flap of the motor vehicle, **characterised in that** the tubular bracket (1) is produced in one piece by means of internal high-pressure forming from a pre-bent tube and at at least one more heavily loaded region, has a larger cross-section with a correspondingly larger bending resistance torque and formed at the end region of the tubular bracket (1) facing the flap is at least one peripheral recess (5), through which either a cable (10) or cable pull is guided into the interior or out of the interior of the tubular bracket (1) and/or through which the wall region (6), which is flattened on one side, of the tubular bracket (1) is connected to the flap by at least one connecting means, for example a screw or a rivet.

2. A tubular bracket according to claim 1, **characterised in that** the tubular bracket (1), at a peripheral region remote from the flap, has a peripheral opening (9), through which the cable (10) or the cable pull is guided out of the interior or into the interior of the tubular bracket (1).

3. A tubular bracket according to any one of claims 1 to 2, **characterised in that** the peripheral recess (5) and/or optionally the peripheral opening (9) is or are formed by a cutout, which is arcuate or rounded, at least in regions, to avoid indentations.

4. A tubular bracket according to any one of claims 1 to 3, **characterised in that** the tubular bracket (1), over its length, has a variable cross-section, at least in regions and/or a variable wall thickness, at least in regions, said cross-section or wall thickness being adapted to the loads to be expected.

5. A tubular bracket according to claim 4, **characterised in that** the tubular bracket (1) has a greater use of material at at least one more highly loaded region and/or a smaller use of material at at least one less loaded region.

6. A tubular bracket according to any one of claims 1 to 5, **characterised in that** at least one force transmission element (12), which is at least indirectly connected by a damping element and/or an opening aid and/or a closing aid to a motor drive and/or a spring energy store, is fastened at a spacing from the real or virtual pivot axis (4) of the tubular bracket to the tubular bracket (1) or an articulation part (11) connected to the tubular bracket.

7. A tubular bracket according to claim 6, **characterised in that** the force transmission element (12) is a projection or pin or ball pin, which is connected to the tubular bracket or articulation part (11) and on which the damping element and/or a transmission element, for example a cable or a rod, is articulated at least indirectly, which element is connected at least indirectly to the motor drive or spring energy store, or additionally the projection or pin or ball pin is optionally connected by friction welding or a clinch connection or tumbling to the tubular bracket or articulation part.

8. A tubular bracket according to claim 6 or 7, **characterised in that** the articulation part (11) is a sheet metal part and/or the articulation part (11) is connected at least by a pin (13, 14) and/or a clinch connection and/or a rivet and/or a screw to the tubular bracket (1).

9. A tubular bracket according to claim 8, **characterised in that** the clinch connection is formed by means of at least one punching tool and a countertool by local forming.

## Revendications

1. Arceau tubulaire (1) pour un volet de véhicule automobile, ayant dans une zone d'extrémité, un axe de pivotement (4) réel ou virtuel, fixe ou d'emplacement variable, avec une pièce du véhicule, fixe ou réglable, et dont l'autre zone d'extrémité aplatie d'un côté est reliée au volet du véhicule,
**caractérisé en ce que**
- l'arceau tubulaire (1) est réalisé en une seule pièce à partir d'un tube cintré avec déformation par haute pression intérieure, et présente dans au moins une zone plus fortement sollicitée, une section plus grande, avec un couple résistant en flexion, plus important, et la zone d'extrémité de l'arceau tubulaire (1) tournée vers le volet, comporte au moins une cavité périphérique (5) traversée par un câble (10) entrant dans l'arceau tubulaire (1) ou en sortant et/ou par lequel la zone de paroi (6) aplatie d'un côté de l'arceau tubulaire (1) est reliée au volet, par au moins un moyen de liaison, par exemple une vis ou un rivet.

2. Arceau tubulaire selon la revendication 1,
**caractérisé en ce que**
l'arceau tubulaire (1) comporte dans sa zone périphérique éloignée du volet, un orifice périphérique (9) à travers lequel passe le câble (10) de l'intérieur de l'arceau tubulaire (1) dans le sens rentrant ou sortant.

3. Arceau tubulaire selon l'une des revendications 1 à 2,
**caractérisé en ce que**
la cavité périphérique (5) et/ou le cas échéant l'orifice périphérique (9) sont formés par une découpe qui, a au moins par zone une forme cintrée ou arrondie pour éviter les entailles.

4. Arceau tubulaire selon l'une des revendications 1 à 3,
**caractérisé en ce que**
l'arceau tubulaire (1) a une section variable sur sa longueur, au moins par zone, et/ou il a une épaisseur de paroi au moins variable par zone, adaptée aux contraintes prévisibles.

5. Arceau tubulaire selon la revendication 4,
**caractérisé en ce que**
l'arceau tubulaire (1) utilise plus de matière dans au moins une zone plus fortement sollicitée et/ou utilise moins de matière dans au moins une zone moins fortement sollicitée.

6. Arceau tubulaire selon l'une des revendications 1 à 5,
**caractérisé en ce que**
à une distance de l'axe de pivotement (4), réel ou virtuel de l'arceau tubulaire (1), celui-ci ou une pièce d'articulation (11) reliés à l'arceau tubulaire portent solidairement au moins un élément de transmission de force (12) relié au moins indirectement par un élément d'amortissement et/ou par une ouverture et/ou par une fermeture, à un actionneur à moteur et/ou à un accumulateur de force de ressort.

7. Arceau tubulaire selon la revendication 6,
**caractérisé en ce que**
l'élément de transmission de force (12) comporte un relief ou un goujon ou un goujon sphérique relié à l'arceau tubulaire ou à la pièce d'articulation (11), sur lequel est articulé au moins un câble ou une barre par l'intermédiaire d'au moins un élément d'amortissement et/ ou un élément de transmission, en étant relié au moins indirectement à l'actionneur à moteur ou à l'accumulateur de force de ressort ou en plus, le cas échéant, la partie en saillie ou le goujon ou le goujon sphérique sont reliés par soudage par friction ou par une liaison rivée ou par sertissage à l'arceau tubulaire ou à la pièce d'articulation.

8. Arceau tubulaire selon la revendication 6 ou 7,
**caractérisé en ce que**
la pièce d'articulation (11) est une pièce en tôle et/ou la pièce d'articulation (11) est reliée à l'arceau tubulaire (1) par l'intermédiaire d'au moins un goujon (13, 14) et/ou d'une liaison rivée et/ou par un rivet et/ou par une vis.

9. Arceau tubulaire selon la revendication 8,
**caractérisé en ce que**
la liaison rivée est formée avec un outil à poinçon et un contre-outil effectuant une déformation locale.
